# FASCICULE DE BREVET EUROPEEN

(11) **EP 3 298 647 B1**
(45) Date de publication et mention de la délivrance du brevet: **24.03.2021**
(21) Numéro de dépôt: 16724866.5
(22) Date de dépôt: 17.05.2016
(51) Int. Cl.: H01M 8/248

(54) **PILE À COMBUSTIBLE**
BRENNSTOFFZELLE
FUEL CELL

(30) Priorité: 22.05.2015 FR 1554609
(43) Date de publication de la demande: 28.03.2018
(73) Titulaire: Compagnie Générale des Etablissements Michelin, 63000 Clermont-Ferrand (FR)
(72) Inventeur: GRANDJEAN, Arnaud, 63040 Clermont-Ferrand Cedex 09 (FR)
(74) Mandataire: Lavoix
(86) Numéro de dépôt international: PCT/EP2016/060957
(87) Numéro de publication internationale: WO 2016/188787

(56) Documents cités:
- WO-A1-2015/056084
- JP-A- 2007 329 017
- KR-A- 20080 086 614
- US-A- 5 993 987
- US-A1- 2005 042 493
- US-A1- 2006 093 890
- US-A1- 2014 356 753

## Description

La présente invention concerne le domaine des piles à combustibles, en particulier le domaine des piles à combustibles aptes à être utilisées dans les véhicules automobiles.

Une pile à combustible permet la génération d'énergie électrique par une réaction électrochimique à partir d'un carburant, généralement de l'hydrogène, et d'un comburant, généralement de l'oxygène.

Une pile à combustible du type à membrane échangeuse de protons à électrolyte solide (PEMFC) comprend habituellement un empilement de cellules élémentaires, en forme de plaques, constituant des générateurs électrochimiques, chacune des cellules étant séparée des cellules adjacentes par des plaques bipolaires. Chaque cellule comprend un élément anodique et un élément cathodique, séparés par un électrolyte solide sous la forme d'une membrane échangeuse d'ions, réalisée par exemple en un matériau polymère perfluoré sulfuré. Selon une variante de réalisation habituelle, chaque plaque bipolaire assure d'un côté l'alimentation en carburant de la cellule adjacente à ce côté et de l'autre côté l'alimentation en comburant de la cellule adjacente à cet autre côté, les alimentations assurées par les plaques bipolaires se faisant en parallèle.

L'empilage successif des plaques bipolaires et des cellules est maintenu sous des pressions d'appui devant garantir un bon contact électrique et une bonne étanchéité. Habituellement, l'empilage comprend des plaques rigides d'extrémité reliées par des tirants, avec insertion d'éléments ressorts pour limiter les effets des variations de température et d'hygrométrie sur les pressions d'appui. Une telle solution n'est cependant pas complètement satisfaisante.

Les brevets WO2015/056084, US2005/0042493, US-5993987, US2006/0093890, US2014/0356753 et JP 2007 329017 décrivent des empilages de plaques entourés par des portions de sangles tendues.

Selon un mode de réalisation, il est proposé une pile à combustible qui comprend un empilage comprenant un ensemble de générateurs électrochimiques superposés, selon un axe d'empilage, et des plaques terminales enserrant axialement ledit ensemble.

La pile comprend en outre au moins un enroulement de maintien entourant ledit empilage et prenant appui sur lesdites plaques terminales.

Ledit enroulement de maintien comprend au moins une nappe d'au moins un fil tendu qui est enroulé autour de l'empilage sous la forme d'une pluralité de spires et dont les extrémités du fil tendu sont fixées sur au moins l'une des plaques terminales.

Ledit enroulement de maintien comprend des portions arrondies en appui sur des portions arrondies d'appui espacées desdites plaques terminales et des portions libres rejoignant ces portions d'appui.

Lesdites portions arrondies et lesdites portions libres dudit enroulement de maintien peuvent avantageusement se rejoindre tangentiellement.

Ledit enroulement de maintien peut s'étendre dans des rainures desdites plaques terminales.

Ledit enroulement de maintien peut être encastré dans lesdites rainures desdites plaques terminales.

Les extrémités du fil formant ledit enroulement peuvent être collées ou tenues par coincement sur lesdites plaques terminales.

Lesdites plaques terminales peuvent présenter des pattes en saillie s'étendant latéralement audit ensemble et dans lesquelles s'étendent lesdites rainures.

La pile peut comprendre plusieurs enroulements de maintien parallèles, espacés perpendiculairement à l'axe d'empilage.

Avantageusement, le fil dudit enroulement de maintien peut être en fibres de verre imprégnées d'une résine thermodurcie (CVR).

Une pile à combustible va maintenant être décrite à titre d'exemple non limitatif, illustré par le dessin sur lequel :
- la figure 1 représente une vue en perspective d'une pile à combustible, y compris un ensemble de générateurs électrochimiques, des plaques terminales et des enroulements de maintien ;
- la figure 2 représente une vue éclatée en perspective d'une partie de l'ensemble de générateurs électrochimiques de la figure 1 ;
- la figure 3 représente une vue en perspective d'une partie de la pile de la figure 1, l'ensemble de générateurs électrochimiques étant enlevé ;
- la figure 4 représente une coupe selon un axe d'empilage de la pile de la figure 1, passant par un enroulement de maintien ; et
- la figure 5 représente une installation de réalisation d'un enroulement de maintien de la pile de la figure 1.

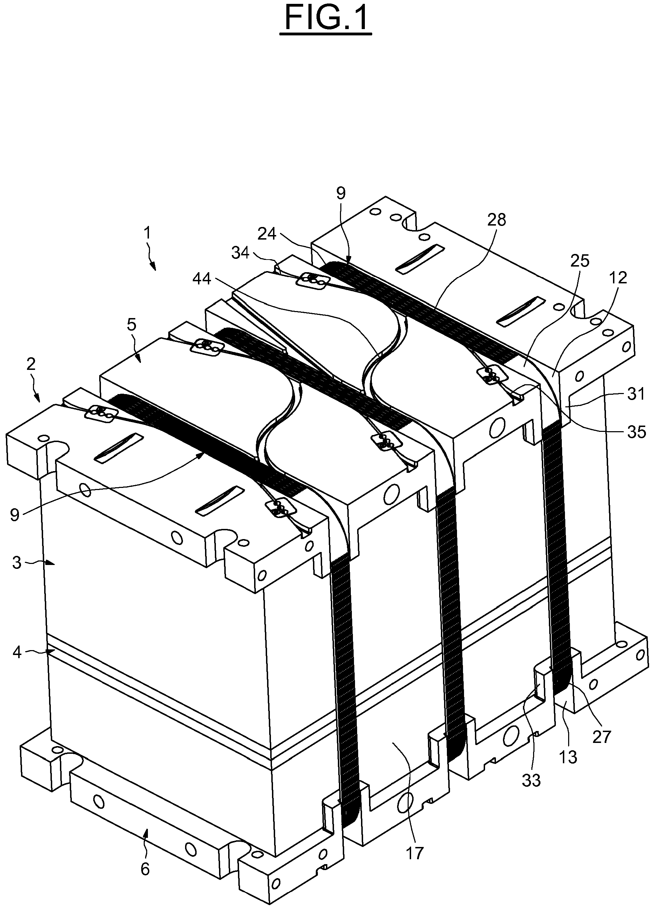

Comme illustrée sur la figure 1, une pile à combustible 1 comprend un empilage 2 qui est constitué d'un ensemble 3 de générateurs électrochimiques 4 superposés, selon un axe d'empilage, et de plaques terminales 5 et 6 enserrant axialement l'ensemble 3.

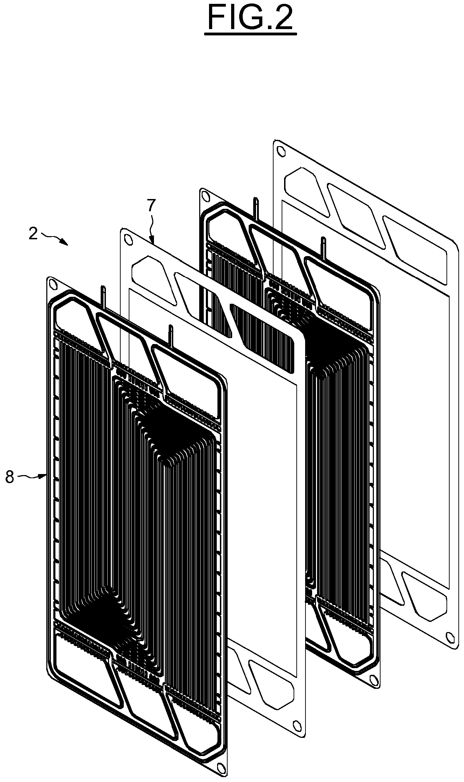

Comme illustré plus précisément sur la figure 2, à titre d'exemple, l'ensemble 2 comprend une pluralité de cellules 7 en forme de plaques, séparées par des plaques bipolaires 8. Chaque cellule 7 comprend trois couches superposées, à savoir une anode, un électrolyte et une cathode. Chaque plaque bipolaire 8 assure d'un côté l'alimentation en carburant de la cellule adjacente à ce côté et de l'autre côté l'alimentation en comburant de la cellule adjacente à cet autre côté. L'ensemble 2 comprend des canaux agencés de façon à assurer ces alimentations via au moins l'une des plaques terminales 5 et 6. Les organes extérieurs à l'empilage 2 de la pile 1, de connexion hydraulique et de connexion électrique, ne sont pas représentés sur le dessin.

L'ensemble 2 se présente sous la forme d'un parallélépipède. Les plaques terminales 5 et 6, qui sont épaisses et rigides, dépassent latéralement par rapport à l'ensemble 2.

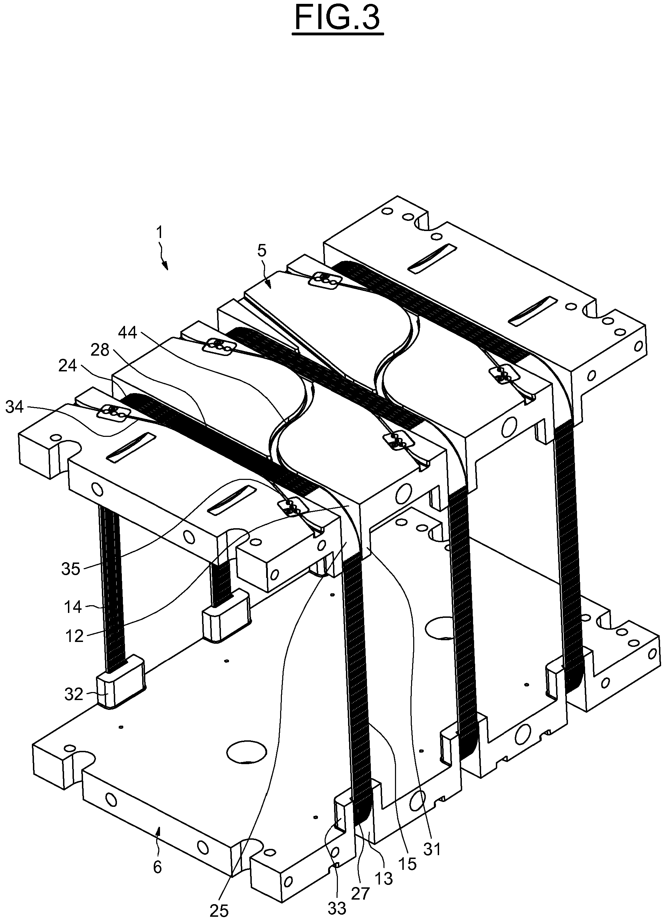

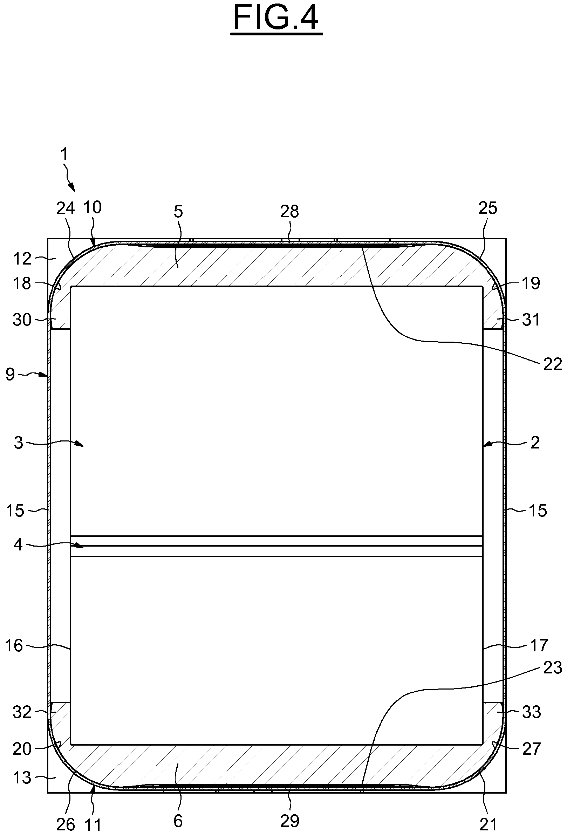

Comme illustré sur les figure 1, 3 et 4, la pile 1 comprend des enroulements 9 d'une pluralité de spires, à une nappe ou plusieurs nappes superposées, d'au moins un fil tendu enroulé autour de l'empilage 2, les enroulements 9 entourant l'empilage 2 et prennent appui sur les plaques terminales 5 et 6. Ces enroulements 9 servent à maintenir fermement les plaques de l'ensemble 2 et des plaques terminales 5 et 6 en appui les unes sur les autres afin assurer les étanchéités souhaitées et les contacts électriques souhaités. Dans l'exemple représenté, trois enroulements 9 sont prévus et sont formés parallèlement à distance les uns des autres, perpendiculairement à l'axe de l'empilage 2.

Chaque enroulement de maintien 9 présente des portions opposées 10 et 11 qui sont encastrées dans des rainures 12 et 13 aménagées dans les faces extérieures des plaques terminales 5 et 6 et présente des portions latérales opposées intermédiaires 14 et 15, libres d'appui, qui rejoignent ces portions encastrées 10 et 11 et qui s'étendent selon l'axe d'empilage, parallèlement à des flancs opposés 16 et 17 de l'ensemble 3 et à distance de ces flancs.

Les fonds des rainures 12 et 13 présentent respectivement des portions d'extrémité 18, 19 et 20, 21, arrondies, en forme de quarts de cercles, espacées par rapport à l'axe de l'empilage, et des portions centrales 22 et 23 plus profondes.

Chaque enroulement de maintien 9 présente des portions arrondies de coins 24, 25 et 26, 27 en appui respectivement sur les portions d'extrémité arrondies 18, 19 et 20, 21 des rainures correspondantes 12 et 13. Les portions d'extrémité arrondies 18, 19 et 20, 21 sont jointes par des portions intermédiaires opposées 28 et 29, libres d'appui, s'étendant au-dessus des portions centrales des rainures 12 et 13 et joignent les portions latérales opposées 14 et 15, libres d'appui.

Ainsi, chaque enroulement de maintien 9 se présente sous la forme d'un bandeau annulaire rectangulaire à coins arrondis, dont les portions intermédiaires opposées 14 et 15, libres d'appui, et les portions intermédiaires opposées 28 et 29 rejoignent tangentiellement les portions arrondies de coins 24, 25 et 26, 27 en appui sur les portions arrondies d'appui 18, 19 et 20, 21 des rainures 12 et 13.

Afin que les portions arrondies d'appui 18, 19 et 20, 21 des rainures 12 et 13 puissent présenter des rayons suffisants, les plaques terminales 5 et 6 présentent des pattes opposées en saillie 30, 31 et 32, 33 qui s'étendent latéralement aux flancs 16 et 17 de l'ensemble 3 et dans lesquels s'étendent les portions d'extrémité arrondies 18, 19 et 20, 21 des rainures 12 et 13, ces pattes assurant également le positionnement des plaques terminales 5 et 6 par rapport à l'ensemble 3.

Les portions d'extrémité du fil formant chaque enroulement de maintien 9 peuvent être fixées sur l'une des plaques terminales 5 et 6 ou peuvent être fixées l'une sur la plaque terminale 5 et l'autre sur la plaque terminale 6.

Par exemple, les portions d'extrémité du fil formant chaque enroulement de maintien 9 s'étendent dans des rainures extérieures auxiliaires de biais 34 et 35 de la plaque terminale 5, débouchant dans la rainure 12, et sont fixées dans ces rainures par une colle adaptée ou par des moyens mécaniques additionnels de coincement.

Préférentiellement, le fil constituant chaque enroulement de maintien 9 est en fibres de verre imprégnées d'une résine thermodurcie, généralement dénommée par l'abréviation CVR. Un tel matériau présente l'avantage d'être résistant en traction tout en présentant une certaine élasticité, de sorte que les enroulements 9 permettent d'obtenir les pressions d'appui souhaitées dans l'empilage 2 et d'assurer les étanchéités souhaitées et les contacts électriques souhaités, mentionnés précédemment, tout en étant aptes à absorber et compenser les variations de dimensions de l'empilage 2, dues en particulier aux variations de température et d'hygrométrie.

Les portions arrondies de coins 24, 25 et 26, 27 de chaque enroulement 9 présentent des rayons tels que le fil de l'enroulement subisse des contraintes de flexion limitées.

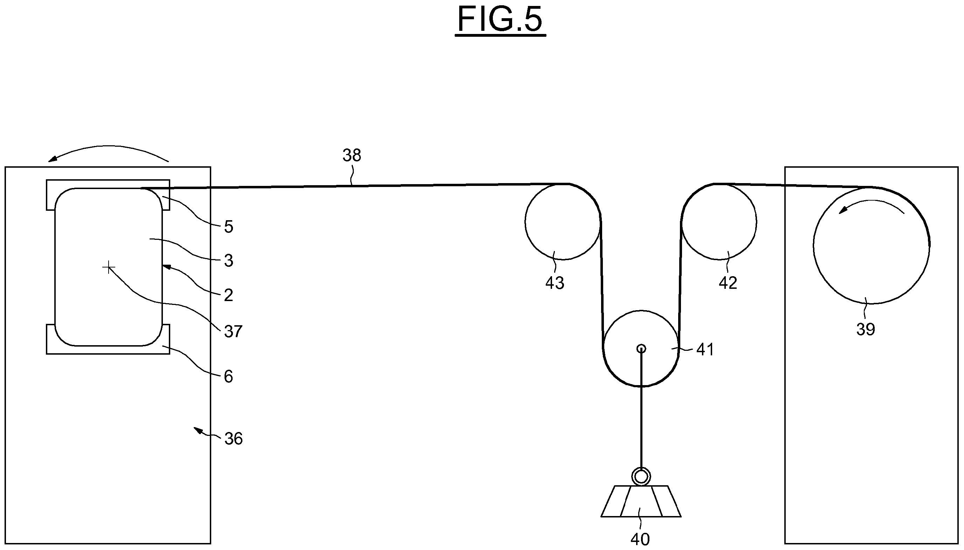

Comme illustré sur la figure 5, chaque enroulement de maintien 9 peut être réalisé à la manière d'un bobinage.

Ayant constitué l'empilage 2 et maintenant ce dernier provisoirement par exemple à l'aide de serre-joints, on installe l'empilage 2 sur une machine tournante 36, apte à faire tourner l'empilage 2 selon un axe de rotation médian 37 perpendiculaire à l'axe d'empilage.

On fixe l'extrémité d'un fil 38 dans l'une des rainures auxiliaires 34 ou 35, ce fil provenant d'une bobine d'alimentation 39.

On fait tourner l'empilage 2 et la bobine d'alimentation 39 de sorte que le fil 38 s'enroule autour de l'empilage 2, en l'engageant dans les rainures 12 et 13 des plaques terminales 5 et 6, la tension du fil 38 étant assurée par un contrepoids 40 suspendu à une poulie 41 tirant vers le bas une portion du fil 38 passant sur des poulies de renvoi 42 et 43 de sorte que cette portion du fil 38 forme un U.

Après avoir réalisé une nappe ou plusieurs nappes superposées du fil 38 autour de l'empilage 2, on engage le fil 38 dans l'autre rainure auxiliaire 34 ou 35. On colle le fil 38 dans cette rainure auxiliaire et on coupe le fil 38 au-delà de ce collage.

On procède de la même façon pour réaliser les autres enroulements de maintien 9.

Dans une variante de réalisation, les enroulements de maintien 9 peuvent être réalisés les uns à la suite des autres, la plaque terminale 5 présentant des rainures de liaison 44 permettant de faire passer le fil 38 d'un enroulement réalisé à l'enroulement voisin à réaliser.

## Revendications

1. Pile à combustible comprenant un empilage comprenant un ensemble (2) de générateurs électrochimiques superposés, selon un axe d'empilage, et des plaques terminales (5, 6) enserrant axialement ledit ensemble, la pile comprenant en outre au moins un enroulement de maintien (9) entourant ledit empilage (2) et prenant appui sur lesdites plaques terminales (5, 6) ;
**caractérisé par le fait que** ledit enroulement de maintien (9) comprend au moins une nappe d'au moins un fil tendu qui est enroulé autour de l'empilage sous la forme d'une pluralité de spires et dont les extrémités du fil tendu sont fixées sur au moins l'une des plaques terminales ;
et que ledit enroulement de maintien (9) comprend des portions arrondies (24, 25, 26, 27) en appui sur des portions arrondies d'appui espacées (18, 19 et 20, 21) desdites plaques terminales (5, 6) et des portions libres (14, 15, 28, 29) rejoignant ces portions d'appui.

2. Pile selon la revendication 1, dans laquelle lesdites portions arrondies et lesdites portions libres dudit enroulement de maintien (9) se rejoignent tangentiellement.

3. Pile selon l'une quelconque des revendications précédentes, dans laquelle ledit enroulement de maintien (9) s'étend dans des rainures (12, 13) desdites plaques terminales (5, 6).

4. Pile selon la revendication 3, dans laquelle ledit enroulement de maintien (9) est encastré dans lesdites rainures (12, 13) desdites plaques terminales (5, 6).

5. Pile selon l'une quelconque des revendications précédentes, dans laquelle les extrémités du fil formant ledit enroulement (9) sont collées ou tenues par coincement sur lesdites plaques terminales.

6. Pile selon l'une quelconque des revendications 3 et 4, dans laquelle lesdites plaques terminales présentent des pattes en saillie (30, 31, 32, 33) s'étendant latéralement audit ensemble (3) et dans lesquelles s'étendent lesdites rainures (12, 13).

7. Pile selon l'une quelconque des revendications précédentes, comprenant plusieurs enroulements de maintien (9) parallèles, espacés perpendiculairement à l'axe d'empilage.

8. Pile selon l'une quelconque des revendications précédentes, dans laquelle le fil dudit enroulement de maintien (9) est en fibres de verre imprégnées d'une résine thermodurcie (CVR).

## Patentansprüche

1. Brennstoffzelle, umfassend eine Stapelung, die eine Anordnung (2) aus elektrochemischen Generatoren umfasst, die, gemäß einer Stapelungsachse, übereinander gelegt sind, und Endplatten (5, 6), welche die Anordnung axial einspannen, wobei die Zelle ferner wenigstens eine Haltewicklung (9) umfasst, welche die Stapelung (2) umgibt und auf den Endplatten (5, 6) zur Abstützung kommt;
**dadurch gekennzeichnet, dass** die Haltewicklung (9) ferner eine Schicht aus mindestens einem gespannten Draht umfasst, der um die Stapelung in Form einer Mehrzahl von Windungen gewickelt ist, und von der die Enden des gespannten Drahtes auf wenigstens einer der Endplatten befestigt sind;
und dass die Haltewicklung (9) gerundete Teile (24, 25, 26, 27) in Abstützung auf beabstandeten gerundeten Abstützteilen (18, 19 und 20, 21) der Endplatten (5, 6) und freie Teile (14, 15, 28, 29), die mit diesen Abstützteilen zusammentreffen, umfasst.

2. Zelle nach Anspruch 1, wobei die gerundeten Teile und die freien Teile der Haltewicklung (9) tangential zusammentreffen.

3. Zelle nach einem der vorhergehenden Ansprüche, wobei die Haltewicklung (9) sich in Nuten (12, 13) der Endplatten (5, 6) erstreckt.

4. Zelle nach Anspruch 3, wobei die Haltewicklung (9) in die Nuten (12, 13) der Endplatten (5, 6) eingepasst ist.

5. Zelle nach einem der vorhergehenden Ansprüche, wobei die Enden des Drahtes, der die Wicklung (9) bildet, auf den Endplatten verklebt sind oder durch Klemmen gehalten werden.

6. Zelle nach einem der Ansprüche 3 und 4, wobei die Endplatten vorspringende Klauen (30, 31, 32, 33) aufweisen, die sich seitlich zu der Anordnung (3) erstrecken und in denen sich die Nuten (12, 13) erstrecken.

7. Zelle nach einem der vorhergehenden Ansprüche, umfassend mehrere parallele Haltewicklungen (9), die senkrecht zu der Stapelungsachse beabstandet sind.

8. Zelle nach einem der vorhergehenden Ansprüche, wobei der Draht der Haltewicklung (9) aus Glasfasern ist, die mit einem wärmegehärteten Harz (CVR) imprägniert sind.

## Claims

1. Fuel cell comprising a stack comprising an assembly (2) of overlaid electrochemical generators, along a stack axis, and end plates (5, 6) axially clasping said assembly, the fuel cell further comprising at least one holding winding (9) surrounding said stack (2) and bearing on said end plates (5, 6),
**characterized in that** said holding winding (9) comprises at least one sheet of at least on taut wire wound around the stack in the form of a plurality of turns, the ends of the taut wire being fixed on at least one of the end plates;
and **in that** said holding winding (9) comprises rounded portions (24, 25, 26, 27) bearing on spaced-apart bearing rounded portions (18, 19 and 20, 21) of said end plates (5, 6) and free portions (14, 15, 28, 29) joining these bearing portions.

2. Fuel cell according to Claim 1, wherein said rounded portions and said free portions of said holding winding (9) join tangentially.

3. Fuel cell according to any one of the preceding claims, wherein said holding winding (9) extends into grooves (12, 13) of said end plates (5, 6).

4. Fuel cell according to claim 3, wherein said holding winding (9) is embedded in said grooves (12, 13) of said end plates (5, 6).

5. Fuel cell according to any one of the preceding claims, wherein the ends of the wire forming said winding (9) are glued or held by wedging on said end plates.

6. Fuel cell according to any one of claims 3 and 4, wherein said end plates have projecting tabs (30, 31, 32, 33) extending laterally with respect to said assembly (3) and into which said grooves (12, 13) extend.

7. Fuel cell according to any one of the preceding claims, comprising several parallel holding windings (9), spaced perpendicularly with respect to the stack axis.

8. Fuel cell according to any one of the preceding claims, wherein the wire of said holding winding (9) is made of glass fibres impregnated with a thermoset resin (CVR).
